# EUROPEAN PATENT APPLICATION

(11) **EP 1 162 804 A2**
(43) Date of publication of application: **12.12.2001**
(21) Application number: 00118536.2
(22) Date of filing: 25.08.2000
(51) Int. Cl.: H04L 29/06, G06F 1/00

(54) **Method and apparatus for monitoring information transmitted on network by using meta-information**

(30) Priority: 06.06.2000 JP 2000168797
(71) Applicant: Hitachi, Ltd., Chiyoda-ku, Tokyo 101-8010 (JP)
(72) Inventor: Honjo, Shinsuke, Hitachi Ltd. Intell Prop. Group, Chiyoda-ku, Tokyo 100-8220 (JP); Susaki, Seiichi, Hitachi Ltd. Intell Prop. Group, Chiyoda-ku, Tokyo 100-8220 (JP)
(74) Representative: Strehl Schübel-Hopf & Partner

(57) **Abstract**

When a WWW browser (1) transmits an HTTP message to a meta-information management gateway (3), secret and public information on communication contents and communication attributes is transmitted. The meta-information management gateway (3) generates meta-information from the received secret and public information, and stores the secret and public meta-information related to each other in a database. The meta-information management gateway (3) adds the public meta-information to the HTTP message and transmits it to a meta-information management gate way (4). The meta-information management gateway (4) verifies the public meta-information, stores it in a database, deletes the public meta-information from the HTTP message, and transmits the HTTP message to a WWW server (2). If there is any problem in the communication contents or attributes, the meta-information management gateway (3) is inquired by using the public meta-information, and the transmitter is identified by using the corresponding secret meta-information.

## Description

### BACKGROUND OF THE INVENTION

The present invention generally relates to guarantee of the contents (communication contents) of information to be communicated and predetermined attributes (communication attributes) of communication possessed by the information, while digital information is transferred via a communication network such as the Internet. More specifically, the present invention relates to a monitor and inspection system for monitoring and inspecting the communication contents and communication attributes over the network, to a monitoring and inspecting method, and to a storage medium storing program codes realizing such a monitoring and inspecting method.

Information is distributed and supplied over the Internet by using various communication protocols and communication applications. For example, information is supplied by using a Web page of the World Wide Web (WWW) and information is supplied and shared by using a bulletin board, a mailing list or a news on a Web page. Digital contents are also distributed by using a communication protocol.

The specification of such a communication protocol, for example, the HyperText Transfer Protocol (HTTP) used by WWW, is described in the Request For Comments (RFC) published from the Internet Engineering Task Force (IETF).

More specifically, the specification of
HTTP/1.0 is defined in RFC1945
(http://www.ietf.org/rfc/rfc1945.txt), and the specification of HTTP/1.1 is defined in RFC2068
(http://www.ietf.org/rfc/rfc2068.txt).

Exchange of information having illegal or improper contents over the Internet using communication techniques constitutes a social problem nowadays. For example, by utilizing the network communication with an anonymous name, some people distribute contents harmful to society such as slander and vilification. By utilizing the nature of relative difficulty in inspecting communication contents and grasping the communication state of communication contents, some people illegally distribute digital contents and exchange improper information without obeying copyright or circulation conditions. In order to solve such problems, it is essential to provide a mechanism for analyzing the communication contents and attributes.

However, communication protocols now in use define only the procedure of data communication and do not provide a mechanism for guaranteeing information on the communication contents and attributes by a third party. Therefore, such communication protocols also do not provide a mechanism for efficiently inspecting the communication contents and attributes by a third party. According to currently available techniques, there is only a method which manually inspects and analyzes one message after another transmitted over the network.

What communication contents are considered improper or what communication state is considered problematic depends on the objective of monitoring and inspecting applications and communications. Therefore, it is impossible to directly incorporate such mechanisms into communication protocols. On the other hand, if all communication contents and attributes are flowed over the Internet, secret information and private information are made open. It is not realistic to provide a third party with all such essential information.

### SUMMARY OF THE INVENTION

The invention has been made in consideration of the above-described circumstances. It is an object of the present invention to provide a method and system capable of guaranteeing the contents of information communicated between two points on the network and the communication attributes possessed by the information.

In order to achieve the above object, according to an embodiment of the invention, when information is transmitted to the Internet, (1) a relay apparatus (called transmission relay apparatus) at an intermediary of a communication path for managing a communication apparatus of a transmitter generates meta-information (transmitter public meta-information) describing information capable of being publicized among the statements of communication contents and attributes, adds the meta-information to transmission information and stores the meta-information in a database of the transmission relay apparatus. Secret information not capable of being publicized among the statements of communication contents and attributes and the transmitter public meta-information related to each other are stored in the database of the transmission relay apparatus. (2) A relay apparatus (called reception relay apparatus) at an intermediary of the communication path for managing a communication apparatus of a receiver side stores and verifies the meta-information added to the transmission information. (3) Each relay apparatus or a combination of a plurality of relay apparatuses can therefore guarantee that the transmission information has the communication contents or attributes.

In this specification, "meta-information" is data about data, i.e., information for describing information to be actually transmitted and received.

Also in this specification, the "communication attributes" are intended to have the following two meanings. (1) One is communication attributes defined by an ordinary communication protocol, such as a transmission address, reception address, transmission date and time, relay nodes, and transmission contents format, in the case of HTTP. (2) The other is communication attributes independent from and not defined by the ordinary communication protocol, such as information on a transmitter, copyright information if the transmission information is digital contents, in the case of HTTP.

Furthermore, in transmitting information, (1) the transmission relay apparatus generates the meta-information describing transmission contents and attribute, transmitter detailed information (transmitter secret meta-information) is kept in secret and related to the transmitter public meta-information to be stored in the database. (2) The receiver side verifies and stores the public meta-information. (3) If there is a possibility of communication having improper contents, the transmitter transmitted the information having improper contents can be identified in cooperation with the transmission relay apparatus.

In distributing digital contents, (1) the transmission relay apparatus generates and guarantees copyright information or circulation information of the digital contents to be transmitted and the public meta-information describing information capable of being publicized among the circulation attribute information such as a distributer and receivers, and stores the circulation attribute information such as copyright information and circulation information to be kept in secret and the public meta-information related each other. (2) The reception relay apparatus verifies and stores the public meta-information. (3) The secret information regarding the circulation having a possibility of violating the copyright or circulation condition can be identified in cooperation with the transmission relay apparatus.

The meta-information or public meta-information may contain information for detecting that the communication message was edited or falsificated and information (e.g., digital signature) for identifying a person or apparatus generated the communication message.

The storage medium may be a CD-ROM, DVD or FD which stores computer readable program codes realizing each process step of the communication monitoring and inspecting method of the invention.

According to the present invention, the statements that the transmission contents are reliable and the attribute information, can be added to a message to be transmitted, while the information desired by the transmitter is kept in secret. Therefore, the transmission contents can be efficiently inspected at an intermediary of the communication path. Further, since the meta-information is stored in the database, communication having improper contents can be found at a later inspection. Still further, only the transmission meta-information management apparatus can relate the public meta-information and secret meta-information (secret information) each other, without publicizing information which the transmitter desires to be kept in secret (transmitter secret meta-information). In this manner, it is possible to acquire the communication attributes and contents kept in secret in the transmission meta-information management apparatus.

Also according to the invention, of the relay apparatuses, the transmission relay apparatus guarantees the meta-information describing communication attribute information independent from the communication protocol and the reception relay apparatus verifies the meta-information. The virtual communication path guaranteed by the transmission and reception relay apparatuses and having features determined by the meta-information can be established and only the communication having the communication attributes matching the features can be transmitted over the virtual communication path.

According to the present invention, the relay apparatuses guarantee, verify and store the communication attributes independent from the communication protocol and communications are monitored without publicizing secret information such as transmitter detailed information. Therefore, secret information such as communication contents and communication attributes can be identified via the transmission relay apparatus. It is therefore possible to provide a communication monitor and inspection system capable of identifying a transmitter which transmitted improper communication contents and illegal information, a communication monitoring and inspecting method, and a computer readable storage medium storing program codes realizing such a communication monitoring and inspecting method.

### BRIEF DESCRIPTION OF THE DRAWINGS

Fig. 1 is a schematic diagram illustrating the outline of an improper information transmitter identifying system according to an embodiment of the invention.

Fig. 2 is a diagram showing an example of a Web page screen of a bulletin board system to be browsed on a WWW browser when a user wishes to state any opinion.

Fig. 3 is a diagram showing an example of a Web page screen to be browsed on a WWW browser when a user browses a bulletin board.

Fig. 4 is a diagram illustrating an operation to be executed when a WWW browser 1 transmits information to a WWW server 2 via meta-information management gateways 3 and 4.

Fig. 5 is a diagram showing an example of the structure of an HTTP request message inserted into transmitter public meta-information.

Fig. 6 is a diagram showing an example of the structure of transmitter public meta-information 22.

Fig. 7 is a diagram showing an example of the structure of transmitter secret meta-information 150.

Fig. 8 is a schematic diagram showing the structure of a meta-information management gateway.

Fig. 9 is a diagram showing the structure of a general information processing apparatus on which a meta-information management gateway is configured.

Fig. 10 is a flow chart illustrating the operation to be executed by a meta-information management gateway when the gateway relays an HTTP message from an internal network to the Internet.

Fig. 11 is a flow chart illustrating the operation to be executed by a meta-information management gateway when the gateway relays an HTTP message from the Internet to an internal network.

Fig. 12 is a flow chart illustrating the operation to be executed by meta-information management gateways 3 and 4 when the gateway 4 finds information having improper contents and notifies this to the gateway 3 and the gateway 3 identifiers the transmitter of this information.

Fig. 13 is a diagram illustrating the embodiment of the invention from the viewpoint of a communication protocol.

### DETAILED DESCRIPTION OF THE EMBODIMENTS

In an embodiment, meta-information contains, for example, information on a relay terminal which generated the meta-information and information of contents. Secret meta-information contains, for example, information identifying the name of a transmitter and a transmitter terminal.

An improper information transmitter identifying system for the WWW according to an embodiment of the invention will be described with reference to the accompanying drawings.

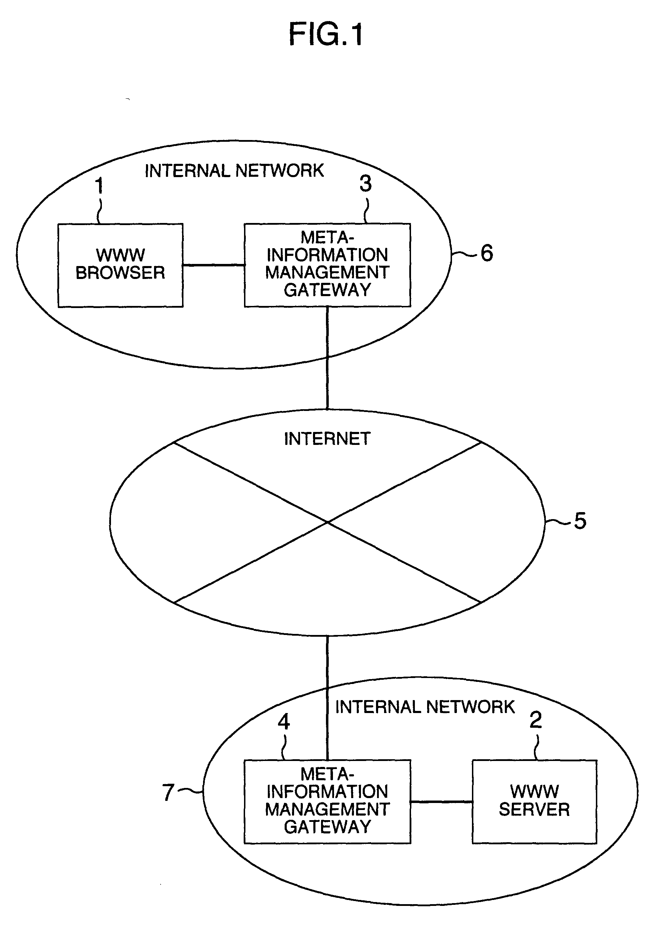

Fig. 1 is a diagram illustrating the outline of the improper information transmitter identifying system according to the embodiment of the invention.

As shown in Fig. 1, in the improper information transmitter identifying system of this embodiment, a WWW browser 1 and a meta-information management gateway 3 are interconnected by an internal network 6. Similarly, a WWW server 2 and a meta-information management gateway 4 are interconnected by an internal network 7. The meta-information management gateways 3 and 4 are interconnected via the Internet 5. For simplicity sake, in Fig. 1 although only one WWW browser 1 and one WWW server 2 are shown in the internal networks 6 and 7, a plurality of WWW browsers and servers are practically used in the internal networks.

An HTTP message realizing a WWW communication protocol is transferred between communication terminals connected to the Internet 5 and internal networks 6 and 7. The meta-information management gateway 3 relays an HTTP message to be transferred between the internal network 6 and the Internet 5, and the meta-information management gateway 4 relays an HTTP message to be transferred between the internal network 7 and the Internet 5.

The internal networks 6 and 7 are logical networks managed by the meta-information management gateways 3 and 4. The "meta-information management gateway" monitors and controls, when necessary, HTTP communications with the external network via the meta-information management gateway to be executed by HTTP communication apparatuses connected to the internal network managed by the gateway. The meta-information management gateway provides functions, particularly a function of approving, when necessary, the attributes and contents of HTTP communications from the internal network, and providing a third party with the attributes and contents as reliable information. In other words, the meta-information management gateway has a function of supplying a kind of certification of information to be transmitted to an external network from the internal network managed by the gateway.

In this embodiment, a bulletin board system will be specifically described which is one of WWW applications having a possibility that improper contents are transmitted to the Internet. The bulletin board system is widely used as a means for stating a free opinion over the WWW and as a useful application as an active information sharing site. In the bulletin board system, a transmitter is not necessarily required to publicize its identification and an opinion can be transmitted anonymously. Therefore, the bulletin board system is widely used as a site for anonymously collecting opinions on a certain subject from a number of users.

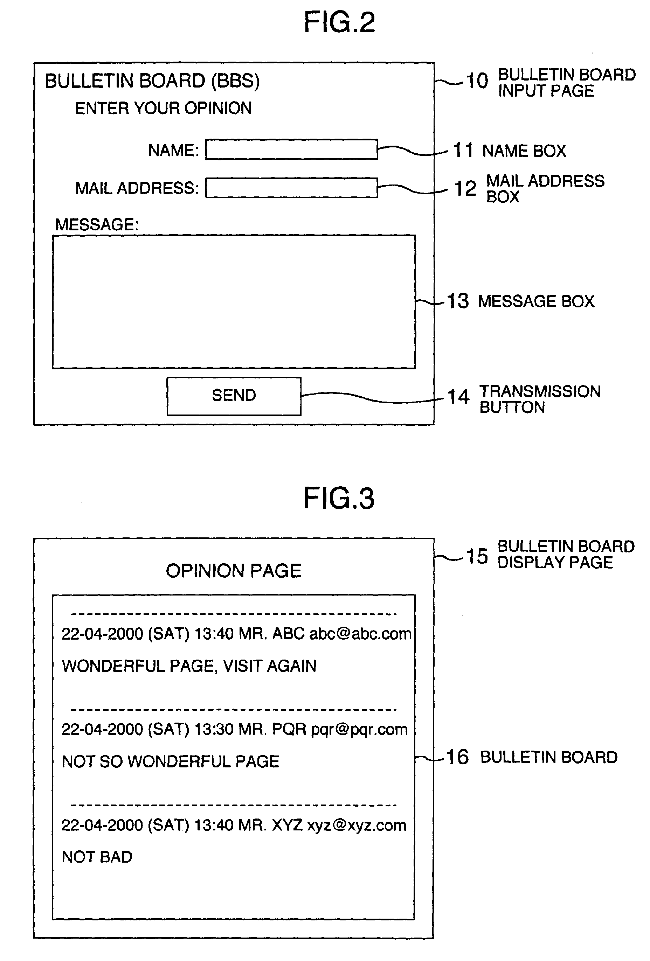

Fig. 2 is a diagram showing an example of a Web page screen to be used when a user wishes to state an opinion in the bulletin board system by using the WWW browser 1. This Web page corresponds to a bulletin board input page 10.

The bulletin board input page 10 is a Web page downloaded from the WWW server 2 by accessing it from the WWW browser 1. The bulletin board input page 10 includes a name box 11, a mail address box 12, a message box 13 and a transmission button 14.

A user name or a user anonymous name called a handle name is entered in the name box 11. A user mail address is entered in the mail address box 12. The contents the user wishes to supply are written in the message box 13. Upon depression of the transmission button 14, the contents are transmitted to the WWW server 2 via the meta-information management gateway 3, the Internet 5 and meta-information gateway 4 to reflect the contents on a bulletin board of the WWW server 2.

Fig. 3 is a diagram showing a Web page screen of the bulletin board to be browsed by a user from the WWW browser 1. The Web page corresponds to a bulletin board display page 15.

The bulletin board display page 15 is downloaded from the WWW server 2 to the WWW browser 1 and displayed on the WWW browser 1. The bulletin board display page 15 has a bulletin board 16 on which contents to be publicized are displayed. For example, as shown in Fig. 3, displayed on the bulletin board are a user name, mail address, message respectively input to the name box 11, mail address box 12, message box 13 of the bulletin board input page 10 (Fig. 2) of the WWW browser 1, as well as the date and others.

The problems associated with a bulletin board system are, as described earlier, possible slanders and crimes because of easy statement of opinions with anonymous names or posed names. The WWW server 2 if it is of a conventional type, is not provided with a mechanism for verifying whether the name and mail address entered in the name box 11 and mail address box 12 are authentic or not. In a conventional bulletin board system, if improper information is written, a system administrator can delete this information. However, a reliable and efficient method of checking the person who wrote such information is not still known.

With a conventional method, an HTTP message received at the WWW server 2 is analyzed to locate a proxy server as a relay terminal at the intermediary. An inquiry is sent to the administrator of the proxy server by using an e-mail or the like to eventually identify the transmitter. With this method, however, if a plurality of proxy servers are used for information transmission, it is necessary to sequentially route these proxy servers at respective stages. Therefore, identifying the transmitter becomes complicated. If a proxy server in a foreign country is used, it is not easy for everyone to send an inquiry because of language barriers. If the contents of an HTTP message itself are edited or falsificated to make it impossible to identify the transmitter, the transmitter cannot be identified.

A method of identifying a transmitter who transmitted information having improper contents by using a WWW bulletin board application, will be described with reference to the improper information transmitter identification system shown in Fig. 1.

In the improper information transmitter identification system shown in Fig. 1, it is assumed that a user of the WWW browser 1 enters improper contents in the bulletin board input page 10 and transmits the contents to the bulletin board of the WWW server 2. Upon depression of the transmission button 14, an HTTP message is transmitted from the WWW browser 1 to the WWW server 2. The meta-information management gateways 3 and 4 as intermediaries on the network process meta-information describing transmitter information.

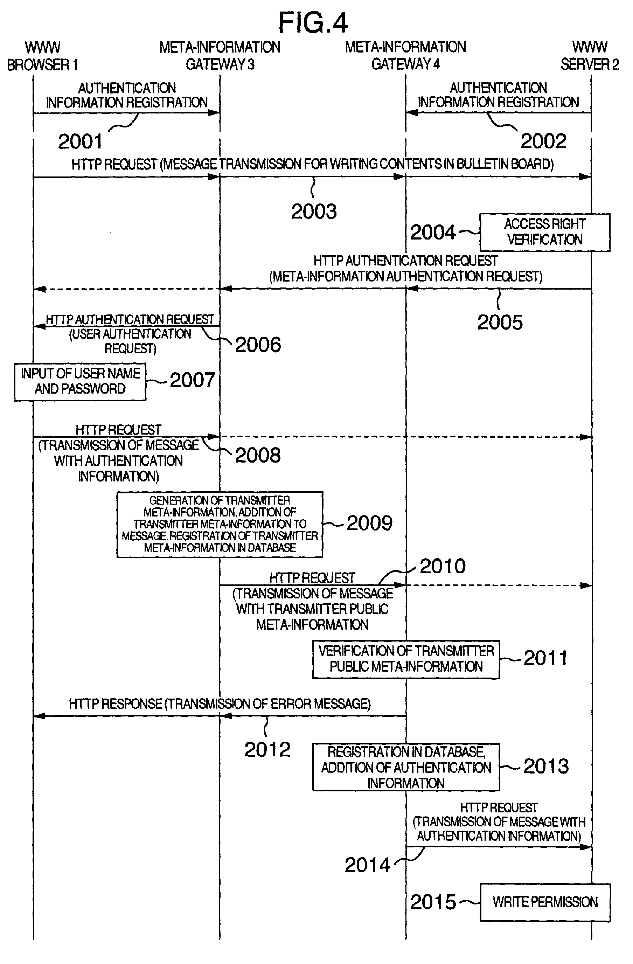

Fig. 4 is a diagram illustrating a process of transmitting information from the WWW browser 1 to the WWW server 4 via the meta-information management gateways 3 and 4 as the relay terminals.

As a pre-process, the gateway 3 registers user names and passwords of users of the WWW browser 1 as authentication information of the WWW browser 1 in order to effect an access control such as access permission of only authenticate users (2001). As the pre-process, the WWW server 2 sets user names and passwords to effect an access control permitting a write operation from the gateway 4 into the bulletin board. At the same time, the gateway 4 registers the user names and passwords of users of the WWW server 2 as authentication information of the WWW server 2 (2002).

When a user enters necessary items into the bulletin board input page 10 shown in Fig. 2 and depresses the transmission button 14, the WWW browser 1 transmits as an HTTP request an HTTP message to the WWW server 2, the HTTP message containing the contents to be written in the bulletin board (2003). In this case, the gateways 3 and 4 at intermediary paths transfer the HTTP request without processing it. Upon reception of the HTTP message, the WWW server 2 verifies and confirms that the HTTP request is a request for a page under the access control (2004).

The WWW server 2 transmits an HTTP message requesting for HTTP authentication to the WWW browser 1 (2005).

When the gateway 3 receives the HTTP message requesting for HTTP authentication transmitted to the WWW browser in the internal network managed by the gateway 3, the gateway 3 does not transfer the received HTTP message but transfers an HTTP message requesting for user authentication relative to the gateway 3 to the WWW browser 1 (2006). Upon reception of the HTTP message requesting for user authentication relative to the gateway 3, the WWW browser 1 displays a panel urging the user to enter the user name and password registered in the gateway 3, and the user enters the user name and password (2007).

In accordance with the entered user name and password, the WWW browser 1 adds transmitter authentication information (or encrypted transmitter authentication information) relative to the gateway 3 to the same HTTP message as the previously transmitted HTTP message containing the bulletin board writing contents, and transmits it to the WWW server 2 (2008).

Upon reception of the HTTP message added with the transmitter information, the gateway 3 verifies the added authentication information by comparing it with the already registered user authentication information (refer to 2001).

If this verification succeeds, in accordance with transmitter information acquired from the added authentication information, the gateway 3 generates transmitter public meta-information and transmitter secret meta-information. Next, the gateway 3 deletes the authentication information from the HTTP message supplied from the transmitter and adds the transmitter public meta-information to the HTTP message, and then stores the secret and public meta-information both related to each other, e.g., by using a meta-information ID as a key, in its database (2009).

The gateway 3 transmits the HTTP message added with the transmitter public meta-information to the WWW server 2 (2010). Upon reception of the HTTP message added with the transmitter public meta-information, the gateway 4 verifies whether the transmitter public meta-information was really transmitted from the gateway 3, e.g., by checking a digital signature of the gateway 3 added to the public meta-information (2011). If this verification fails, the gateway 4 transmits an HTTP message to the WWW browser 1, the HTTP message containing an error message to the effect that the transmitter meta-information is illegal (2012). If the verification succeeds, the gateway 4 stores the transmitter public meta information in its database and adds the authentication information, previously supplied from the WWW server 2 and registered in the database and including the user name and password for writing the contents in the bulletin board of the WWW server 2, to the HTTP message (2013). The gateway 4 then transmits the HTTP message to the WWW server 2 (2014). In this case, since the verified authentication information exists, the contents are permitted to be written in the bulletin board (2015).

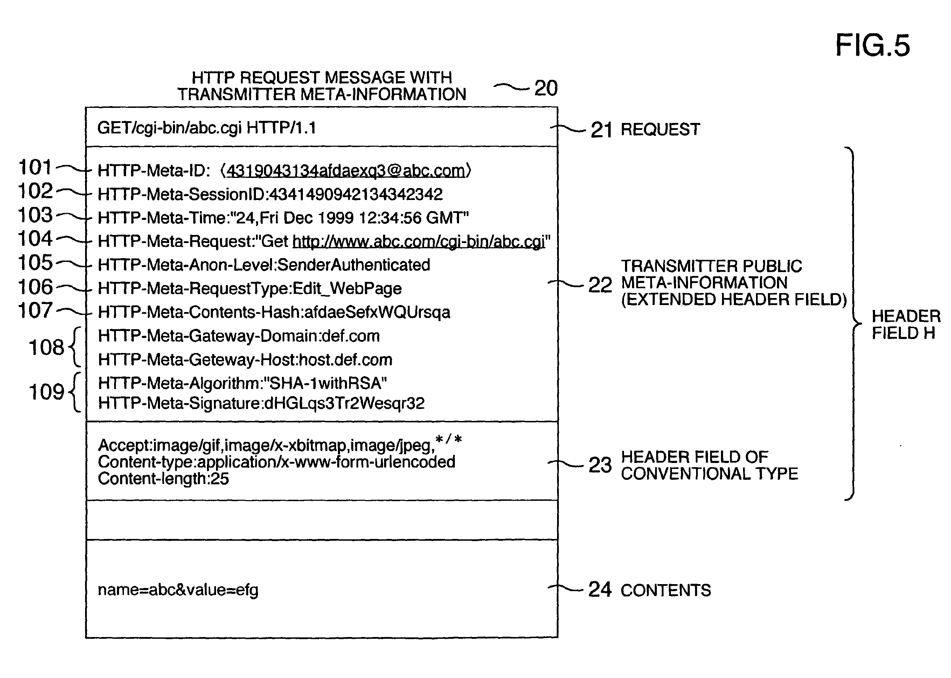

Fig. 5 is a diagram showing an example of the structure of an HTTP request message added with transmitter public meta-information.

An HTTP request message with transmitter public meta-information 20 is a message to be transmitted from the gateway 3 to the gateway 4 (2010 in Fig. 4). The message 20 is constituted of a request 21 describing the contents of the request, transmitter public meta-information 22 describing the transmitter, a conventional type header field 23 describing attributes of the HTTP message, and contents 24 describing the contents to be transmitted. The transmitter public meta-information 22 is described in accordance with the same description method as of the conventional type header field 23, and written in the HTTP message as an extended field (extended header field) of the conventional type header field 23. Namely, the conventional type header field 23 and transmitter public meta-information 22 (extended header field) constitute a new header field H. In this way, even a WWW application which cannot understand transmitter public meta-information can process the HTTP message with transmitter public meta-information without any practical problem.

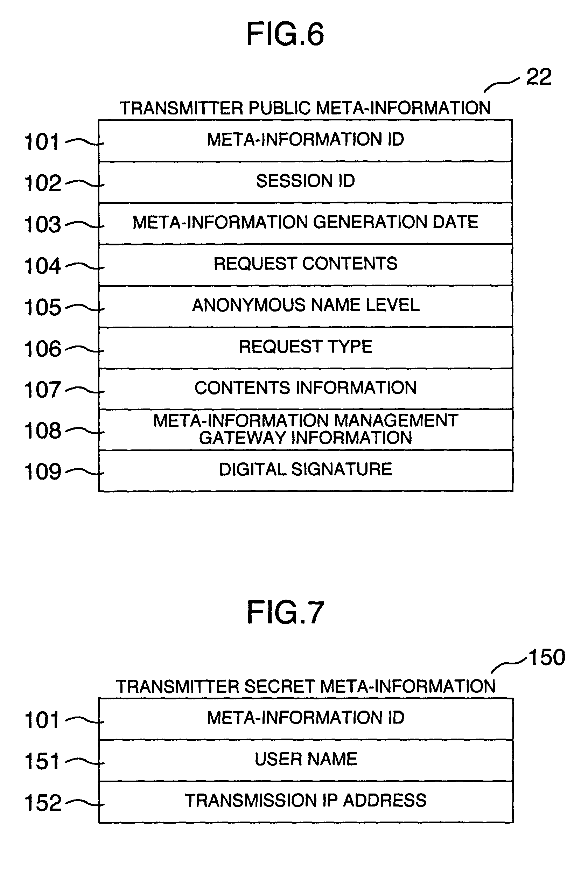

Fig. 6 is a diagram showing an example of the structure of the transmitter public meta-information 22. The transmitter public meta-information 22 is added to an HTTP message and stored in a database of the meta-information management gateway.

As shown in Fig. 6, the transmitter public meta-information 22 contains: a meta-information ID 101; a session ID 102; a meta-information generation date 103 describing a date when the meta-information was generated; request contents 104 describing the request contents of the HTTP request message; an anonymous level 105; a request type 106 describing the type of the request; contents information 107 describing information of the contents contained in the message; meta-information management gateway information 108 describing the meta-information management gateway which formed the meta-information; and a digital signature 109 entered by the meta-information management gateway for certifying all items described above.

The meta-information ID 101 is used by the meta-information management gateway to identify the transmitter meta-information generated by the gateway. If the same identifier is used for both the transmitter public meta-information and transmitter secret meta-information, this identifier may be used as a key for searching a pair of the transmitter public meta-information and transmitter secret meta-information.
The detailed information about a transmitter is not written directly to the transmitter public meta-information 22.

The session ID 102 is used for identifying a group the HTTP message belongs to, the HTTP message containing meta-information which supplies the anonymous level 105, request type 106 and meta-information management gateway information 108. The meta-information determines the features of a virtual communication path between the meta-information management gateways 3 and 4.

The anonymous level 105 indicates that at what precision the meta-information management gateway 3 identifies a transmitter, e.g., that the gateway 3 identifies a transmitter up to the handle name or up to the transmitter name.

The request type 106 indicates the type of a Web page requested to be accessed by the HTTP request message. For example, this request type designates an access to an HTML capable of being edited or to a CGI program having a possibility to vary the contents.

The message contents information 107 contains, if the HTTP request message contains contents, the contents themselves, a hash value of the contents, or the summary (abstract) of the contents.

The meta-information management gateway information 108 is information of the meta-information management gateway which generated the transmitter meta-information, e.g., an address and name of the gateway on the network. Fig. 5 shows examples of specific contents of each field of the transmitter public meta-information 22.

Fig. 7 shows an example of the structure of the transmitter secret meta-information 150.

The transmitter secret meta-information 150 contains the meta-information ID 101, a user name 151 for identifying the transmitter, and a transmission IP address 152 for designating an IP address used by the transmitter as the transmission source.

The transmitter secret meta-information 150 is secret information for identifying the transmitter, and stored in the database of the gateway 3 in correspondence with the transmitter public meta information 22 by using the meta information ID 101 as a key.

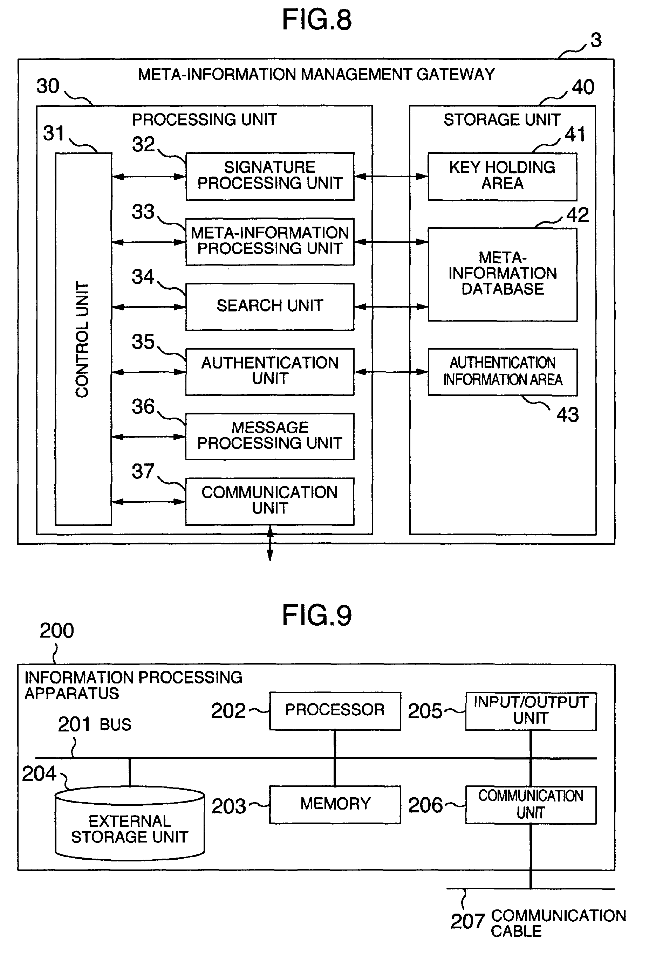

Fig. 8 is a schematic diagram showing the structure of a meta-information management gateway 3. As shown in Fig. 8, the gate way 3 is constituted of a processing unit 30 and a storage unit 40. The meta-information management gate way 4 has the structure similar to the gateway 3.

The processing unit 30 includes: a control unit 31 for wholly controlling each part of the meta-information management gateway 3 (or 4); a signature processing unit 32 for generating and verifying a signature of meta-information; a meta-information processing unit 33 for generating and verifying meta-information; a search unit 34 for searching information on meta-information; an authentication unit 35 for authenticating a transmitter of an HTTP message; a message processing unit 36 for processing an HTTP message; and a communication unit 37 for communication with another apparatus via the Internet 5 or internal network 6 (or 7).

The memory unit 40 includes: a key holding area 41 for holding a signature key and an authentication key to be used by the signature processing unit 32 for generation and authentication of a signature; a meta-information database 42 for storing the transmitter public meta-information 22 received via the communication unit 37 and meta-information (transmitter public meta-information 22 and transmitter secret meta-information 150) generated by the meta-information processing unit 33; and an authentication information area 43 for storing authentication information to be used by the authentication unit 35 for authentication.

The meta-information processing unit 33 issues the meta-information ID 101 to be inserted into the transmitter public meta-information 22, refers to the transmitter information supplied from the authentication information area 43 and authentication unit 35, and generates the transmitter public meta-information 22 in cooperation with the message processing unit 36 and signature processing unit 32. The transmitter secret meta-information 150 is generated in a similar manner, related to the transmitter public meta-information 22 by the metal information ID 101, and stored in the meta-information database 42.

As shown in Fig. 9, the meta-information management gateway 3 (or 4) can be configured on an information processing apparatus 200 of a general structure including a bus 201, a processor 202, a memory 203, an external storage unit 204, an input/output unit 205, a communication unit 206 and a communication cable 207. The processing unit 30 (Fig. 8) of the meta-information management gateway is realized as a process running on the information processing apparatus after the processor 202 executes a program loaded in the memory 203. The memory 203 and external storage unit 204 are used as the storage unit 40.

Next, the operation will be described which operation is executed by the meta-information management gateways 3 and 4 while a message is transmitted from the WWW browser 1 to the WWW server 2 via the meta-information management gateways 3 and 4.

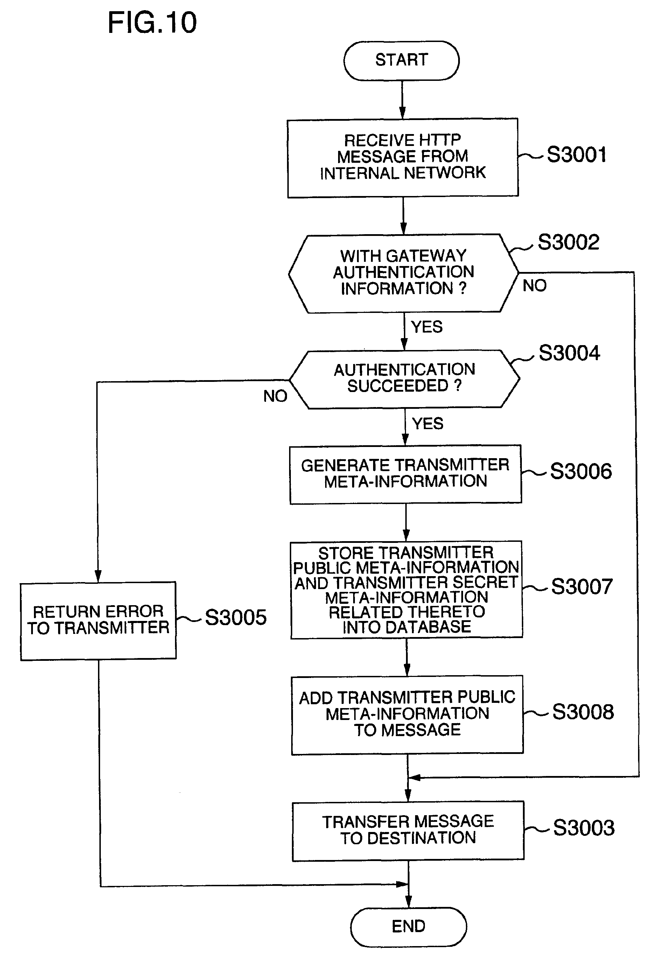

Fig. 10 is a flow chart illustrating the operation to be executed by the meta-information management gateway 3 (or 4) when the gateway 3 (or 4) relays an HTTP message from the internal network 6 (or 7) to the Internet 5.

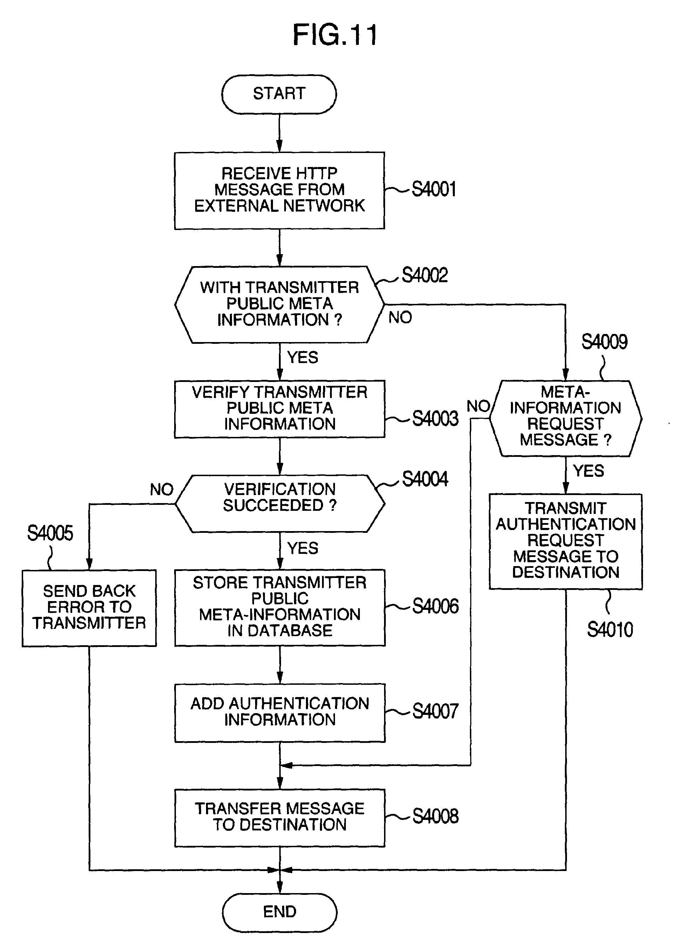

In the description with reference to Fig. 10 and Fig. 11, any one of the meta-information management gateways 3 and 4 or any one of the internal networks 6 and 7 is collectively called a meta-information management gateway or an internal network, respectively.

The flow illustrated in Fig. 10 starts when the meta-information management gateway receives an HTTP message.

First, the communication unit 37 of the meta-information management gateway receives an HTTP message from a WWW communication apparatus connected to the internal network (Step S3001).

The message processing unit 36 analyzes the header field H of the received HTTP message to check whether there is authentication information of the meta-information management gateway (Step S3002). If there is no authentication information for the gateway (corresponding to 2003 or 2005 in Fig. 4), the HTTP message is transmitted to the destination via the Internet 5 connected to the communication unit 37 (S3003).

If the HTTP message contains the authentication information (or encrypted authentication information) for the gateway (Step S3002) (corresponding to 2008 in Fig. 4), the authentication unit 35 compares the authentication information with the user authentication information already stored in the authentication information area 43 at 2001 or 2002 shown in Fig. 4 to verify the authentication (Step S3004). If the authentication fails, an error is sent back to the transmitter (Step S3005) to terminate the flow.

If the authentication succeeds (Step S3004), the message processing unit 36 deletes the authentication information from the HTTP message, and asks the meta-information processing unit 33 to generate transmitter meta-information. The meta-information processing unit 33 generates the meta-information ID 101 for identifying the transmitter meta-information and generates the items other than the digital signature 109 of the transmitter public meta-information 22 and the transmitter secret meta-information 150.

Next, the signature processing unit 32 reads the signature key of the meta-information management gateway from the key holding area 41, and generates a signature of the meta-information management gateway for the attribute information of the transmitter public meta-information 22, to thereby complete the transmitter public meta-information 22 (Step S3006).

The meta-information processing unit 33 relates the generated transmitter public meta-information 22 to the transmitter secret meta-information 150 and stores the transmitter public and secret meta-information in the meta-information database 42 (Step S3007).

The message processing unit 36 adds the transmitter public meta-information 22 to the HTTP message (Step S3008) and transmits it to the destination via the Internet 5 connected to the communication unit 37 (Step S3003).

Fig. 11 is a flow chart illustrating the operation to be executed by the meta-information management gateway 3 (or 4) when the gateway 3 (or 4) relays an HTTP message from the Internet 5 to the internal network 6 (or 7).

The flow illustrated in Fig. 11 starts when the meta-information management gateway receives an HTTP message.

First, the communication unit 37 of the gateway receives an HTTP message from a WWW communication apparatus connected to the Internet 5 (Step S4001).

The message processing unit 36 analyzes the HTTP message to check whether there is the transmitter public meta-information 22 (Step S4002). If there is the transmitter public meta-information 22 (YES at Step S4002, corresponding to 2010 in Fig. 4), the message processing unit 36 asks the signature processing unit 32 to verify the digital signature 106. The signature processing unit 32 reads the authentication key of the transmission source meta-information management gateway which generated the transmitter public meta-information 22, from the key holding area 41 to thereby verify whether the digital signature 106 was really made by the transmission source gateway.

The meta-information processing unit 33 verifies each item of the transmitter public meta information 22, and by referring to the verification result of the digital signature 106, verifies the transmitter public meta-information 22 (Step S4003). If the verification fails (NO at Step S4004), an error is sent back to the transmitter via the Internet 5 connected to the communication unit 37 (Step S4005) to thereafter terminate the flow. If verification of the transmitter public meta-information 22 succeeds (YES at Step S4004), the meta-information processing unit 33 stores the transmitter public meta-information 22 in the meta-information database 42 (Step S4006). Next, the authentication unit 35 acquires the destination authentication information from the authentication information area 43, the message processing unit adds this authentication information to the HTTP message (Step S4007) which is then transmitted to the destination via the internal network connected to the communication unit 37 (Step S4008).

If the HTTP message does not contain the transmitter public meta-information 22 (NO at Step S4002), the message processing unit 36 checks whether the HTTP message is the meta-information request message (Step S4009). If not (NO at Step S4009, corresponding to 2003, 2012 in Fig. 4), then the HTTP message is transmitted to the destination via the internal network connected to the communication unit 37 (Step S4008). If the HTTP message is the meta-information request message (YES at Step S4009, corresponding to 2005 in Fig. 4), an HTTP message requesting the destination to authenticate the meta-information management gateway is transmitted (Step S4010).

Next, a method of identifying a transmitter which transmitted improper contents, through cooperation of the meta-information management gateways 3 and 4, will be described.

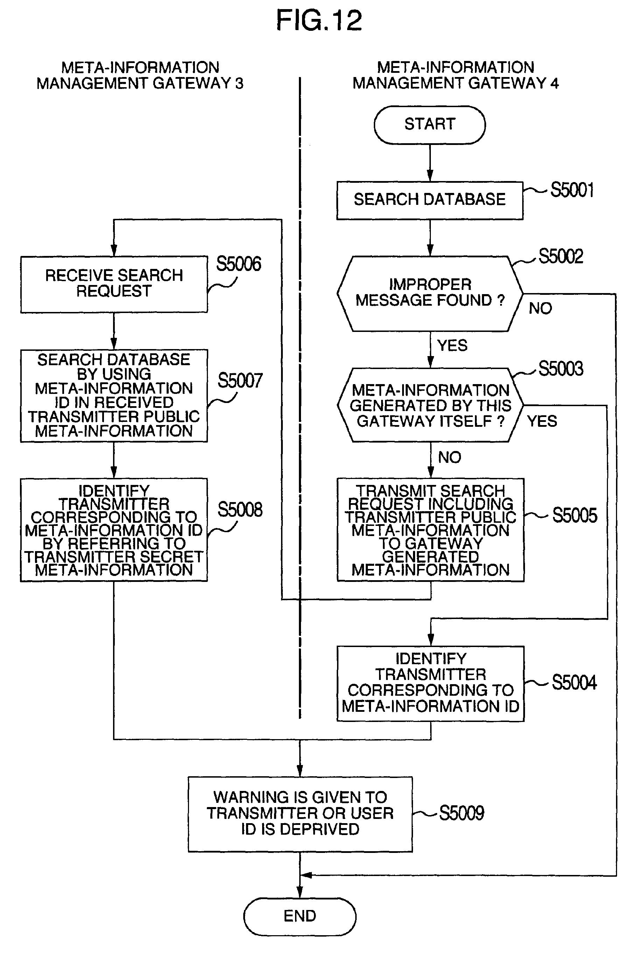

Fig. 12 is a flow chart illustrating the operation to be executed by meta-information management gateways 3 and 4 when the gateway 4 finds information having improper contents and notifies this to the gateway 3 and the gateway 3 identifiers the transmitter of this information.

The flow shown in Fig. 12 starts when a search request for checking whether information relayed by the meta-information management gateway contains improper contents, is issued, the search request being issued voluntarily by the gateway itself or when the third party informs that the gateway relayed information having improper contents.

The search unit 34 of the meta-information management gateway 4 searches the meta-information database 42 to check whether it stores the information having improper contents (Step S5001). The check is performed in accordance with the contents information 107 in the message of the transmitter meta-information stored in the meta-information database 42.

If the search unit 34 cannot find the transmitter meta-information regarding the information having improper contents in the meta-information database 42 (NO at Step S5002), the flow terminates.

If the search unit 34 finds the information having improper contents (YES at Step S5002), the meta information management gateway information 108 is read from the associated transmitter public meta-information 22, and if the meta-information was generated by the gateway 4 itself (YES at Step S5003), the user name 151 in the corresponding transmitter secret meta-information 150 is checked to identify the transmitter (Step S5004).

After the transmitter is identified, warning is given to the transmitter or the user ID is deprived according to the management policy (Step S5009) to thereafter terminate the process.

If the meta-information management gateway 4 did not generate the transmitter public meta-information 22 (NO at Step S5003), the search request including the transmitter public meta-information 22 is transmitted to the meta-information management gateway 3 generated the transmitter public meta-information (Step S5005).

When the meta-information management gateway 3 receives the search request including the transmitter public meta-information 22 transmitted from the meta-information management gateway 4 (Step S5006), the search unit 34 of the gateway 3 searches its meta-information database 42 by using the meta-information ID 101 in the received transmitter public meta-information 22 (Step S5007). If the transmitter secret meta-information 150 corresponding to the meta-information ID is found, the user name 151 is checked to identifier the transmitter (Step S5008).

After the transmitter is identified, warning is given to the transmitter or the user ID is deprived according to the management policy (Step S5009) to thereafter terminate the process.

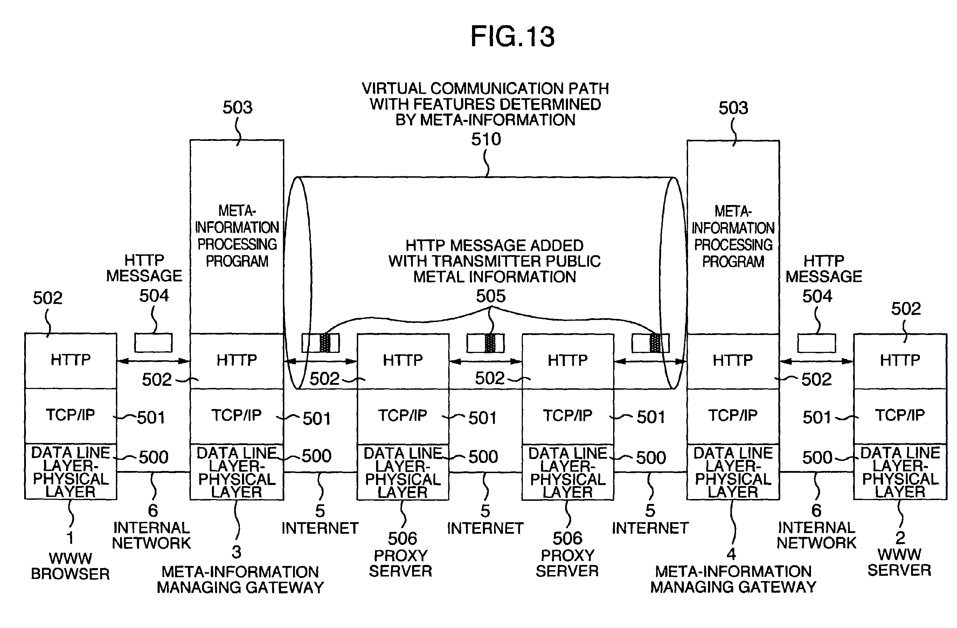

Fig. 13 is a diagram illustrating the embodiment from the viewpoint of a communication protocol.

In addition to the system shown in Fig. 1 constituted of the WWW browser 1, WWW server 2, meta-information management gateways 3 and 4, the Internet 5, and internal networks 6 and 7, two proxy servers 506 are inserted between the gateways 3 and 4 as shown in Fig. 13, the proxy server transferring an HTTP message.

The communication protocol for the WWW browser 1, WWW server 2, proxy servers 506 and gateways 3 and 4 is constituted of a data link layer and physical layer 500, a TCP/IP 501, and an HTTP 502.
Each of the meta-information management gateways 3 and 4 has also a meta-information processing layer 503 on HTTP 502.

An HTTP message 504 transferred to and from the WWW browser 1 is transferred between the meta-information management gateways 3 and 4 as an HTTP message 505 added with meta-information. The transmitter public meta-information 22 is guaranteed by the meta-information management gateway 3 and verified by the meta-information management gateway 4. The HTTP message whose verification failed at the meta-information management gateway 4 will not be transmitted to the WWW server 2.

With this structure, only communication information in conformity with meta-information agreed between the meta-information management gateways 3 and 4 is transmitted and received. As a result, a virtual communication path 510 whose features are determined by the meta-information is established between the meta-information management gateways 3 and 4. Namely, the virtual communication path 510 having guaranteed communication attributes independent from HTTP is established between the meta-information management gateways.

The embodiment of the invention has been described above.

In this embodiment, the WWW browser 1 transmits information to the WWW server 2 via the meta-information management gateways 3 and 4. The meta-information management gateway 3 generates the transmitter public meta-information 22 which does not contain directly the detailed user information and the transmitter secret meta-information 150 which contains directly the detailed user information. The meta-information management gateway 3 stores the information 22 and 150 related each other in the database, adds only the transmitter public meta-information 22 to the HTTP message, and transmits it to the meta-information management gateway 4. The meta-information management gateway 4 derives the transmitter public meta-information 22 from the received HTTP message, verifies it and stores it in the database, and transmits the HTTP message to the WWW browser 2.

As above, according to the embodiment, an HTTP message to be transmitted via the Internet is inserted with transmitter indirect information (transmitter public meta-information). It is therefore possible to provide a third party an approach to identifying a reliable transmitter, while transmitter detailed information (transmitter secret meta-information) is prevented from being tapped by other terminals connected to the Internet. If the transmitter public meta-information 22 is edited or falsificated at intermediaries, such edition or falsification can be detected through signature verification at the reception meta-information management gateway 4.

If there is a fear that information having improper contents was relayed by the meta-information management gateway, an administrator checks the stored transmitted public meta-information 22 and requests the meta-information management gateway which generated the meta-information to investigate. The requested meta-information management gateway searches the transmitter secret meta-information 150 from the database and identifies the transmitter or transmitter terminal to inform the requester of the identified transmitter or transmitter terminal.

The invention is not limited only to the above-described embodiment, but various modifications are possible without departing from the scope and spirit of the invention. For example, if the WWW server 2 can be assumed widely and in general public to be trustworthy, the WWW server 2 and meta-information management gateway 4 may be configured on the same information processing apparatus. If the WWW browser 1 can be assumed widely and in general public to be trustworthy, the WWW browser 1 and meta-information management gateway 3 may be configured on the same information processing apparatus.

The embodiment aims to identify a transmitter or transmitter terminal. If digital contents are to be transmitted and received by using the same configuration of the embodiment, the invention may aim to monitor and manage transmission/reception of digital contents as to whether the contents are in conformity with copyright and circulation conditions.

In this case, in addition to the above-described authentication to be performed by the WWW browser 1 and meta-information gateway 3 and by the WWW server 2 and meta-information gateway 4, agreement is made on copyright information and circulation information of digital contents to be transmitted, and in accordance with the agreement contents, the meta-information management gateway generates the transmitter public meta-information 22. In this case, copyright information and circulation information are written as the message contents information 107 of the transmitter meta-information 22.

The communication monitor and inspection system and method has been described in which communication contents and communication attributes are monitored and inspected by using meta-information management gateways in order to guarantee the communication contents and attributes. Program codes of each process of the communication monitoring and inspecting method may be stored in a storage medium such as a CD-ROM, DVD, and FD to be commercially sold or program codes may be supplied via a communication line such as the Internet. In this case, a user installs the program codes acquired from the storage medium or the communication line to easily realize the communication monitor and inspection system of the invention. The communication monitoring and inspecting method can therefore be made widely available.

## Claims

1. A communication monitor system having two relay apparatus (3, 4) installed at intermediaries of a communication path between two communication apparatus (1, 2) which execute communications by using a communication protocol, the two relay apparatus managing the two communication apparatus, respectively, wherein each of the relay apparatus comprises:
means for, before a communication message transmitted from the communication apparatus managed by the own relay apparatus is relayed, generating meta-information describing communication attributes independent from the communication protocol (2008);
means for, before a communication message added with the meta-information and transmitted from the communication apparatus other than the communication apparatus managed by the own relay apparatus ix relayed, checking the meta-information and verifying whether the communication message having communication attributes described in the meta-information is transferred or not (2011); and
means for preventing transfer of the communication message if the verification of the meta-information failed (2012),
wherein each of the relay apparatus guarantees and verifies the meta information describing the communication attributes independent from the communication protocol to form a virtual communication path having features determined by information of the communication attributes between the relay apparatus.

2. The system of claim 1, wherein the relay apparatus comprises:
means for, before a communication message transmitted from the communication apparatus managed by the own relay apparatus is relayed, generating public meta-information and secret meta-information describing communication attributes independent from the communication protocol (2008);
means for adding the public meta-information to the communication message;
means for storing the public meta-information and secret meta-information related each other in an own database;
means for, before a communication message added with the public meta-information and transmitted from the communication apparatus other than the communication apparatus managed by the own relay apparatus is relayed, checking the public meta-information and verifying whether the communication message having communication attributes described in the public meta-information is transferred or not, on the assumption that the relay apparatus generated the public meta-information has the non-public meta-information (2011); and
means for preventing transfer of the communication message if the verification of the public meta-information failed.

3. A communication inspection system having two relay apparatus (3, 4) installed at intermediaries of a communication path between two communication apparatus (1, 2) which execute communications by using a communication protocol, the two relay apparatus managing the two communication apparatus, respectively, wherein each of the relay apparatus comprises:
means for, before a communication message transmitted from the communication apparatus managed by the own relay apparatus is relayed, generating meta-information describing communication attributes independent from the communication protocol (2008);
means for adding the meta-information to the communication message;
means for storing the meta-information in an own database;
means for, before a communication message added with the meta-information and transmitted from the communication apparatus other than the communication apparatus managed by the own relay apparatus is relayed, storing the meta-information in the own database; and
means, responsive to a search request under a search condition of some communication attributes, the search request issued to the own relay apparatus after communication, for searching the own database and identifying the meta-information matching the search condition (S5011∼S5003),
wherein the communication attributes are inspected by the own relay apparatus after communication.

4. The system of claim 3, wherein the relay apparatus comprises:
means for, before a communication message transmitted from the communication apparatus managed by the own relay apparatus is relayed, generating public meta-information and secret meta-information describing communication attributes independent from the communication protocol (2008);
means for adding the public meta-information to the communication message;
means for storing the public meta-information and secret meta-information related each other in an own database;
means for, before a communication message added with the public meta-information and transmitted from the communication apparatus other than the communication apparatus managed by the own relay apparatus is relayed, storing the public meta-information in the own database;
means, responsive to a search request under a search condition of some communication attribute, the search request issued to the own relay apparatus after communication, for searching the own database and identifying the public meta-information or secret meta-information matching the search condition (S5001∼S5003); and
means for, if the identified meta-information was generated by the relay apparatus other than the own relay apparatus, supplying the search condition to the first mentioned relay apparatus to request for a further search (S5006).

5. A communication monitoring method of monitoring communication between communication apparatus (3, 4) by two relay apparatus at intermediaries of a communication path, the communication being performed by using a communication protocol, the two relay apparatus including a transmission relay apparatus for managing transmission communication apparatus and a reception relay apparatus for managing reception communication apparatus, the method comprising:
a transmission relay apparatus monitoring step of adding meta-information describing communication attributes independent from the communication protocol to a communication message to another communication apparatus, before the transmission relay apparatus transfers the communication message (2008); and
a reception relay apparatus monitoring step of verifying attribute information described in the meta-information to judge whether the communication message is to be transferred, and verifying that the communication message is related to the meta-information (2010),
wherein a virtual communication path having features determined by the communication attributes independent from the communication protocol is established between the relay apparatus under agreement by the relay apparatus, only a communication message having the communication attributes matching the features is allowed to be transmitted or received via the virtual communication path.

6. The method of claim 5, wherein
said transmission relay apparatus monitoring step includes the step of, before the transmission relay apparatus transfers the communication message, guaranteeing the meta-information describing the communication attributes independent from the communication protocol relative to another communication apparatus, separating the meta-information into public meta-information and secret meta-information, storing the public meta-information and secret meta-information related to each other in an own database, and adding the public meta-information to the communication message (2008); and
said reception relay apparatus monitoring step includes the step of, before the reception relay apparatus transfers the communication message with the meta-information, checking information of the communication attributes described in the public meta-information to judge whether the communication message is transferred or not, and verifying whether the communication message is related to the public meta-information, on the assumption that the secret meta-information has been guaranteed by the transmission relay apparatus (2001).

7. A communication inspecting method of inspecting communication matching some condition by relay apparatus (34) at intermediaries of a communication path between communication apparatus (1, 2), the communication being executed by using a communication protocol, and the relay apparatus including a transmission relay apparatus for managing transmission communication apparatus and a reception relay apparatus for managing reception communication apparatus, the method comprising:
a transmission relay apparatus inspecting step of adding meta-information describing communication attributes independent from the communication protocol to a communication message to another communication apparatus, and storing the meta-information in an own database, before the transmission relay apparatus transfers the communication message (2008);
a reception relay apparatus inspecting step of, before the reception relay apparatus transfers the communication message with the meta-information, storing the meta-information in an own database; and
a relay apparatus inspecting step of, in inspecting communication matching some condition after the communication, identifying the meta-information matching the condition by the relay apparatus by searching the meta-information stored in the own database or in cooperation with the other relay apparatus, to thereby inspect the communication attributes (2011).

8. The method of claim 7, wherein:
said transmission relay apparatus inspecting step includes a step of, before the transmission relay apparatus transfers the communication message, separating the meta-information describing the communication attributes into secret meta-information and public meta-information for another communication apparatus, storing the secret meta-information and public meta-information related to each other in the own database, and adding the public meta-information to the communication message (2008);
a reception relay apparatus inspecting step of, before the reception relay apparatus transfers the communication message with the meta-information, storing the meta-information in an own database; and
said relay apparatus inspecting step includes a step of, in inspecting communication matching some condition after the communication, identifying the public meta-information matching the condition by the relay apparatus by searching the public meta-information stored in the own database or in cooperation with the other relay apparatus, and identifying the secret meta-information via the relay apparatus generated the public meta information, to thereby inspect the communication attributes independent from the communication protocol (2011).

9. The invention of any preceding claim, wherein the meta-information or public meta-information contains information for detecting that the communication message was edited or falsificated and information for identifying a person or apparatus generated the communication message.

10. A computer readable storage medium storing program codes of each of said steps realizing the method of any one of claims 5 to 9.

11. A method of authenticating communication information transferred over a communication network (5 - 7) by a relay apparatus (3 or 4) connected to the communication network, the method comprising the steps of:
receiving from a transmitter apparatus (1) communication information and authentication information for authenticating a transmitter of the communication information (2008);
verifying the authentication information (2009); and
if said verifying step indicates that the authentication information is correct, adding authentication information of the relay apparatus to the communication information and transferring the communication information to the communication network (2010).

12. A method of adding information of a transmitter of communication information to the communication information transferred over a communication network (5 - 7) by a relay apparatus (3 or 4) connected to the communication network, the method comprising the steps of:
receiving from a transmitter apparatus (1) communication information and authentication information for authenticating a transmitter of the communication information (2008);
verifying the authentication information (2009); and
if said verifying step indicates that the authentication information is correct, adding authentication information of the transmitter to the communication information and transferring the communication information to the communication network (2010).

13. A method of establishing a virtual communication path (510) between two relay apparatus (3 - 4) connected to a communication network (5 - 7), the virtual communication path guaranteeing predetermined communication contents or communication attributes agreed between the two relay apparatus, the method comprising the steps of:
receiving communication information at a transmission side relay apparatus (2008);
verifying at the transmission side relay apparatus whether predetermined communication contents or communication attributes can be guaranteed for the communication information (2009);
if said verifying step indicates that the guarantee is possible, adding authentication formation (first authentication information) of the transmission side relay apparatus to the communication information, and transferring the communication information from the transmission side relay apparatus to a transmission destination over the communication network (2010);
receiving at a reception side relay apparatus the communication information and the first authentication information from the transmission side relay apparatus (2010);
verifying the first authentication information at the reception side relay apparatus (2011); and
if said verifying step indicates that the first authentication information is correct, adding authentication information (second authentication information) of the reception side relay apparatus to the communication information, in place of the first authentication information (2013), and transferring the communication information from the reception side relay apparatus to a communication destination (2014).
